Europäisches Patentamt

European Patent Office

Office européen des brevets

(11) Veröffentlichungsnummer: **0 072 964**
**A1**

# (12) EUROPÄISCHE PATENTANMELDUNG

(21) Anmeldenummer: **82107201.4**

(22) Anmeldetag: **09.08.82**

(51) Int. Cl.³: **G 09 F 9/30**

(30) Priorität: **20.08.81 DE 3132968**

(43) Veröffentlichungstag der Anmeldung:
**02.03.83 Patentblatt 83/9**

(84) Benannte Vertragsstaaten:
**AT BE CH DE FR GB IT LI LU NL SE**

(71) Anmelder: **SIEMENS AKTIENGESELLSCHAFT**
**Berlin und München Wittelsbacherplatz 2**
**D-8000 München 2(DE)**

(72) Erfinder: **Behmer, Albin, Dr.**
**Meisenweg 5**
**D-8620 Lichtenfels(DE)**

(72) Erfinder: **Mahler, Ernst**
**Margaretenweg 5**
**D-8620 Lichtenfels(DE)**

(54) **Grossanzeigevorrichtung.**

(57) Großanzeige mit einem Gehäuse (4) aus vorzugsweise Kunststoff, insbesondere für Verkehrsinformationen an Kraftfahrzeugstraßen, Bahnhöfen und Bahnanlagen, bei der mindestens eine erregende Lichtquelle vorzugsweise eine Miniaturlampe im Kunststoffreflektor (2) angeordnet ist. Der Reflektor (2) kann aus glasklarem Kunststoff oder vorzugsweise aus fluoreszierendem Kunststoff bestehen.

FIG 1

EP 0 072 964 A1

0072964

SIEMENS AKTIENGESELLSCHAFT          Unser Zeichen
Berlin und München                  VPA 81 P 7 5 5 7 E

Großanzeigevorrichtung

Großanzeigevorrichtung mit eigenen Lichtquellen und
einer Anzeige über Leuchtelemente und einem Reflektor
als Bildfläche.

Die derzeit bekannten Großleuchten beispielsweise Großreklameflächen, die mit einer Vielzahl von elektrischen
Birnen und deren Anbringungsvorrichtungen ausgestattet
sind, haben große Abmessungen, insbesondere eine große
Tiefe. Das bei diesen Großanzeigen für die Leuchtschrift
eingesetzte Lampenfeld benötigt ferner eine hohe elektrische Leistung. Andererseits erfordert das Erscheinen der
geeigneten Anzeigelemente Zeit. Bei Flughafen- und
U-Bahn-Terminals sind träge Fallklappen erforderlich. Es
ist hier jedes Symbol auf Tafeln aufgedruckt. Bei Bahnhofterminals erfolgen die Anzeigen über beschriebene
Bänder. Das Durchlaufen der Bänder bis zum Erscheinen der
geeigneten Anzeige dauert sehr lange.

Der Erfindung liegt die Aufgabe zugrunde, eine Vorrichtung
der eingangs genannten Art so zu gestalten, daß sie
raumsparend ausbildbar und in kürzester Zeitfolge eine
deutliche Bildwiedergabe bei geringer elektrischer
Leistungsaufnahme ermöglicht.

Diese Aufgabe wird dadurch gelöst, daß erfindungsgemäß
in einem Gehäuse 4 die erregende (n) Lichtquelle (n) 3
kleiner Dimension und Leistungsaufnahme, ganz oder teilweise in dem (den) Leuchtelement (en) 2 angeordnet
ist (sind). Mit Ausführungen gemäß der Erfindung werden

Td 2 Gr / 18.5.1981

bei einer geringen Bautiefe und einem geringen Stromverbrauch von 0,5 bis 2 Watt je Reflektor die besten Ergebnisse erzielt. Die Wärmeeinwirkung auf die gesamte Vorrichtung ist vernachlässigbar klein.

Als Bildfläche dient wenigstens ein Reflektor. Dieser kann aus einem glasklarem Kunststoff beispielsweise Polymethylmethacrylat, Polykarbonat, Polyvinylchlorid, Polyester- und Epoxidharz bestehen. Besonders günstige Ergebnisse wurden mit Kunststoffreflektoren erzielt, die Fluoreszenzfarbstoff enthalten. Die Leuchtelemente sind nach hinten zu reflektorartig ausgebildet, dadurch wird erreicht, daß das Leuchtelement am Lichtaustrittsfenster gleichmäßig ausgeleuchtet wird. Das Lichtaustrittsfenster kann glatt sein oder mit prismenartigen Erhebungen versehen sein.

Als erregende Lichtquellen kleiner Abmessungen und Leistungsaufnahme haben sich Miniaturlampen (Kolben ⌀ ca.5 mm, Leistungsaufnahme bis zu 2 Watt) besonders bewährt. Es können auch Glimmlampen oder LED's eingesetzt werden. Der Vorteil dieser Lampen liegt in der geringen Wärmeentwicklung, die den direkten Kontakt mit dem Kunststoff zuläßt. Als Anzeige kommen auch Lichtventile, beispielsweise eine Flüssigkeitsanzeige, elektrochrome Displays sowie Anzeigen auf der Basis von Transparentkeramik in Frage.

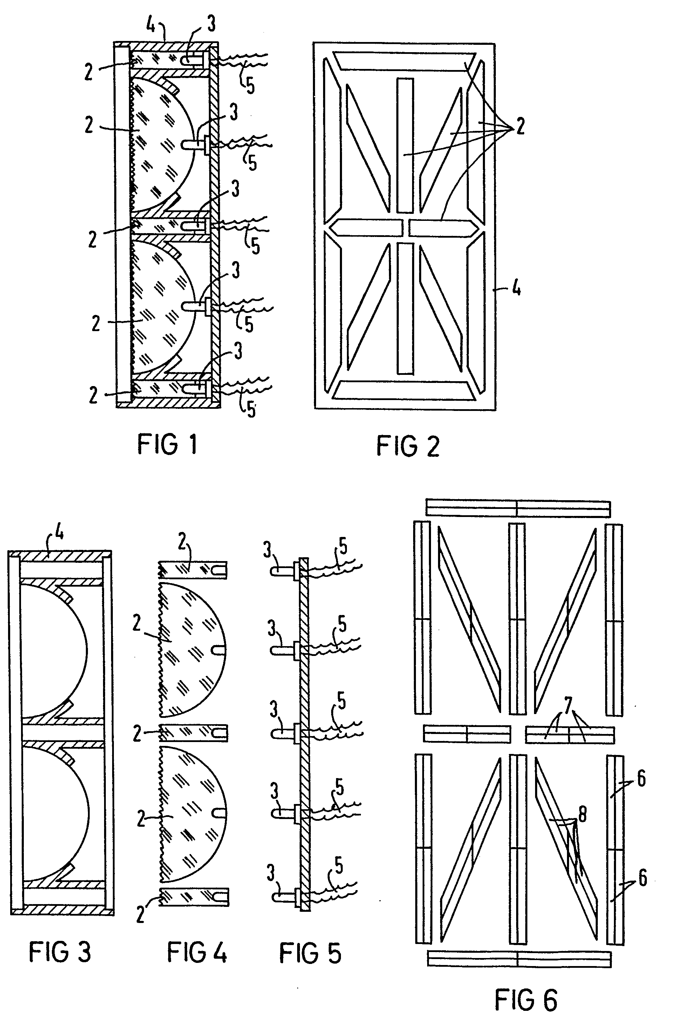

Die Leuchtelemente sind tunlichst im Baukastenprinzip zusammensetzbar, wodurch die Erzeugung beliebig großer Anzeigen möglich ist (FIG 6). Ein ganz besonderer Vorteil liegt darin, daß die Leuchtelemente als Grundbaustein ausgeführt sein können und durch Zusammenbau mit sich selbst die Erzeugung nahezu jeder Anzeigengröße ermöglichen (FIG 6).

Bei erfindungsgemäße Großanzeigen ist es vorteilhaft, das Gehäuse und die Leuchtelemente im 2-Farbenspritzguß herzustellen. Für die Herstellung des Kunststoffgehäuses kann auch das Tiefzieh- oder Spritzgießverfahren angewendet werden und der Reflektor kann im Spritzgießverfahren hergestellt werden. Die Herstellung der Leuchtelemente kann auch im Gießverfahren (Polyester-, Epoxidharz) erfolgen. Sie können auch aus Halbzeug spanabhebend hergestellt werden. Gehäuse aus anderen Werkstoffen können nach den jeweilig gebräuchlichen Verfahren hergestellt sein.

Mit einer Vorrichtung gemäß der Erfindung können sowohl zeitlich andauernde als auch bewegte Bildeindrucke erzeugt werden. Die Bildträger und die zugeordneten Bilddarstellungen können zentral angefertigt und dann zu dem Anbringungsort transportiert und montiert werden. Es können mit der Erfindung nicht allein Buchstaben, sondern jede Art geometrische oder figürliche Bilder dargestellt werden. Sie finden mit besonderem Vorteil zum Anzeigen von Zeit, Mitteilungen und Symbolen in Flughafen- und Bahnhofterminals und als Wettkampfanzeige Verwendung. Eine besonders bevorzugte Anwendung der Erfindung ist die für Verkehrsinformationen an Kraftfahrzeugstraßen.

Die Erfindung wird anhand eines bevorzugten Ausführungsbeispiels im Hinblick auf die Zeichnung noch näher erläutert. Die Figuren sind sehr vereinfacht. Für das Verständnis der Erfindung nicht unbedingt erforderliche Einzelteile einer Großanzeige sind weggelassen, z.B. die elektronische Ansteuerung der Lichtelemente.

Das dargestellte Ausführungsbeispiel zeigt in FIG 1 im Schnitt eine Großanzeige. Die als Bildfläche dienende Platte ist als Reflektor 2 ausgebildet. Eine Abdeckung nach hinten mit einer reflektierenden Schicht kann zweckmäßig sein. In den Reflektoren 2 sind Miniaturleuchten 3 angeordnet. Mit 5 sind die elektrischen Anschlußverbindungen bezeichnet. Mittels eines Gehäuses 4 sind die Reflektoren 2 mit den übrigen Bauteilen zusammengehalten.

In den Figuren 2 bis 5 sind die einzelnen Teile einer Großanzeige gemäß der Erfindung skizziert im Schnitt dargestellt, und zwar zeigt FIG 2 die Anzeigevorrichtung in Vorderansicht,

FIG 3 ein Gehäuse,

FIG 4 Reflektoren aus fluoreszierenden Kunststoff und

FIG 5 einen Beleuchtungseinsatz.

FIG 6 zeigt eine Anordnung zur Herstellung nahezu beliebig großer Anzeigen. Es sind jeweils drei Grundelemente 6, 7 und 8 notwendig, um durch Kombination mit sich selbst eine größere Anzeige herzustellen.


6 Figuren

10 Patentansprüche

**0072964**

Patentansprüche

1. Großanzeigevorrichtung mit eigenen Lichtquellen und einer Anzeige über Leuchtelemente und einem Reflektor als Bildfläche, d a d u r c h   g e k e n n z e i c h - n e t , daß in einem Gehäuse (4) die erregende (n) Lichtquelle (n) (3) kleiner Dimension und Leistungsaufnahme, ganz oder teilweise in dem (den) Leuchtelement (en) (2) angeordnet ist (sind).

2. Großanzeigevorrichtung nach Anspruch 1, d a d u r c h   g e k e n n z e i c h n e t , daß das Gehäuse (4) aus Kunststoff besteht.

3. Großanzeigevorrichtung nach Anspruch 1 oder 2, d a - d u r c h   g e k e n n z e i c h n e t , daß das (die) Leuchtelement (e) (2) als Scheibe ausgebildet ist (sind) und im Bereich der Lampe (n) als Reflektor ausgebildet ist (sind)

4. Großanzeigevorrichtung nach Anspruch 1 bis 3, d a - d u r c h   g e k e n n z e i c h n e t , daß der (die) Reflektor (en) (2) aus Fluoreszenzfarbstoff enthaltendem Kunststoff besteht (en).

5. Großanzeigevorrichtung nach Anspruch 1 bis 3, d a - d u r c h   g e k e n n z e i c h n e t , daß der (die) Reflektor (en) (2) aus glasklarem Kunststoff besteht (en).

6. Großanzeigevorrichtung nach Anspruch 1 bis 4 oder 5, d a d u r c h   g e k e n n z e i c h n e t , daß als erregende Lichtquelle (3) mindestens eine Miniaturlampe dient.

7. Verfahren zur Herstellung einer Großanzeigevorrichtung nach Anspruch 2 bis 6, d a d u r c h   g e k e n n - z e i c h n e t , daß das Kunststoffgehäuse (4) im Tiefzieh- oder Spitzgießverfahren und der Reflektor im Spritzgießverfahren hergestellt werden.

8. Großanzeigevorrichtung nach Anspruch 2 bis 6, d a - d u r c h   g e k e n n z e i c h n e t , daß das Kunststoffgehäuse (4) und der (die) Reflektor (en) (2) in Zwei-Farbenspritzguß hergestellt werden.

9. Anwendung einer Vorrichtung nach einem der Ansprüche 1 bis 8 für Verkehrsinformationen an Kraftfahrzeugstraßen.

10. Anwendung einer Vorrichtung nach einem der Ansprüche 1 bis 8 für Verkehrs- und Betriebsinformationen an Bahn- anlagen und Bahnhöfen.

FIG 1

FIG 2

FIG 3

FIG 4

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 09 F 9/30 |
| X | FR-A-2 280 938 (GRATACOS FERNAND) *Seite 2, Zeilen 35-40; Seite 3, Zeilen 22-40; Seite 4, Zeilen 1-14; Abbildungen* | 1,3,5, 6 | |
| | --- | | |
| X | US-A-3 174 144 (RICHARD J.O'NEILL) *Spalte 2, Zeilen 55-65; Spalte 3; Spalte 4, Zeilen 1-46; Abbildungen | 1-3,5- 7 | |
| | --- | | |
| A | DE-A-2 719 808 (LOEFFEL GERHARD et al.) *Seite 7, Zeilen 22-29* | 4 | |
| | --- | | RECHERCHIERTE SACHGEBIETE (Int. Cl. ³) |
| A | FR-A-1 568 189 (WAGNER ELECTRIC CORP.) *Seite 3, Spalte 1, Zeilen 31-61; Spalte 2, Zeilen 1-31; Abbildungen* | 3,5,7 | G 09 F |
| | --- | | |
| A | FR-A-2 381 365 (WALTER ANGST) *Seite 9, Zeilen 16-21; Seite 21, Zeilen 21-29; Abbildungen 1,38* | 7 | |
| | --- | | |
| A | GB-A-1 440 765 (HIRD BROWN LIMITED) *Patentansprüche; Seite 1, Zeilen 24-28; Abbildungen* | 3,5,9, 10 | |
| | ----- | | |

Der vorliegende Recherchenbericht wurde für alle Patentansprüche erstellt.

| Recherchenort DEN HAAG | Abschlußdatum der Recherche 26-11-1982 | Prüfer MIOT F.P. |
|---|---|---|